# EUROPEAN PATENT SPECIFICATION

(11) **EP 0 664 178 B1**
(45) Date of publication and mention of the grant of the patent: **08.04.1998**
(21) Application number: 94919858.4
(22) Date of filing: 06.07.1994
(51) Int. Cl.: B23H 7/10

(54) **WIRE CUT ELECTRIC DISCHARGE MACHINE HAVING AUTOMATIC WIRE CONNECTING FUNCTION**
DRAHTSCHNEIDEFUNKENEROSIONSMASCHINE MIT SELBSTTÄTIGEM DRAHTVERBINDUNGSVERFAHREN
MACHINE D'USINAGE PAR FIL-ELECTRODE A FONCTION AUTOMATIQUE DE CONNEXION

(30) Priority: 12.07.1993 JP 193869/93
(43) Date of publication of application: 26.07.1995
(73) Proprietor: FANUC LTD., Minamitsuru-gun, Yamanashi 401-05 (JP)
(72) Inventor: KAJITORI, Toyotada, Fanuc Dai-3 Vira-karamatsu, Minamitsuru-gun, Yamanashi 401-05 (JP); MIYAMURA, Kazuyuki, Ogurahosekiseikikogyo K. K., Tokyo 143 Tokyo 143 (JP)
(74) Representative: Billington, Lawrence Emlyn
(86) International application number: JP9401099
(87) International publication number: WO9502482

(56) References cited:
- JP-A- 2 237 724
- JP-A- 2 298 435
- JP-A-60 263 623
- JP-B- 6 126 455

## Description

The present invention relates to a wire cut electric discharge machine for machining a workpiece by the electric discharge energy produced between a wire electrode and a workpiece, and more particularly to a wire cut electric discharge machine having a function of an automatic wire connection.

Some wire cut electric discharge machines equipped with an automatic control device have an automatic wire connecting function or an automatic wire connection restoring function to perform an unmanned operation for many hours. Examples of wire cut electric discharge machines are disclosed for example in JP-A,2-237724, JP-A,2-298435, JP-A,60-263623 and JP-B2,61-26455.

The automatic wire connecting function is a function in which: when the machine completes a machining operation for one figure on a workpiece and proceeds to a machining operation for another figure, a connected wire is cut in response to the command of the control device; an end of the wire at which it is cut is relatively moved to a position opposite to a new machining start hole formed in the workpiece; and the wire is inserted into this machining start hole to complete wire connection. The automatic wire connection restoring function is a function in which: when a wire is broken during a machining operation for one figure for some reason, the wire left on the upstream side of the breakage point with respect to the wire running direction is cut in response to the command of the control device which has detected the breakage of wire, and an end of the broken wire is inserted again into the machining start hole at the position where the machining on the workpiece is interrupted to restore the wire connection.

For the connection of the wire in either case, it is necessary to smoothly pass the wire, which is newly fed after being cut, through small insertion holes in upper and lower guides, a machining start hole, etc. in the wire passage so that the leading end of the wire is caught by a wire take-up roller and a pinch roller at the end of the wire passage. An improper automatic wire connection results in the stoppage of continuous operation, causing a serious hindrance to the machining operation.

The automatic wire connecting function and the automatic wire connection restoring function are equivalent to each other with respect to the mechanisms to be incorporated into a wire cut electric discharge machine, but are different from each other only in the conditions requiring these functions. Therefore, for these functions, the explanation will be made below only as to the automatic wire connecting function.

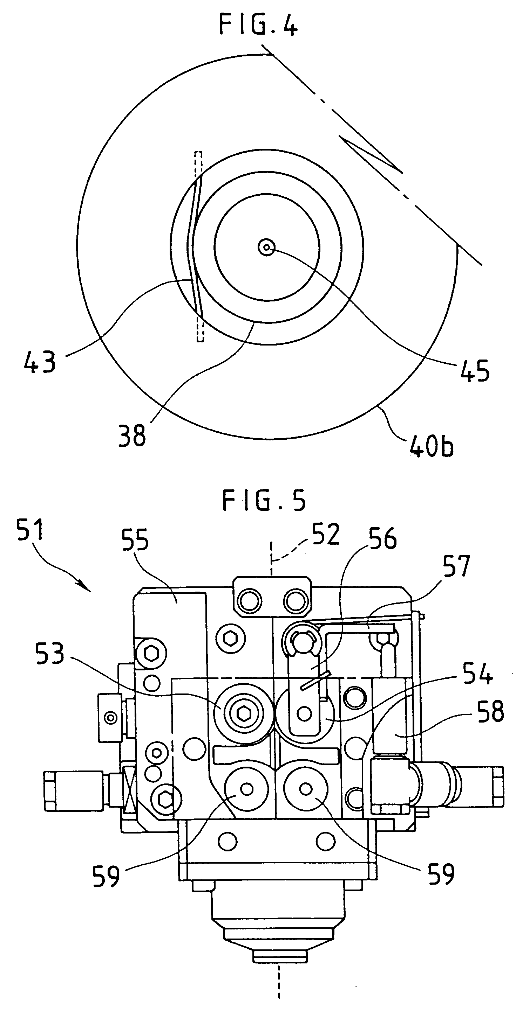

FIG. 5 shows an example of a conventional upper guide. The upper guide 51 has, in its interior, a feed roller 53 which is in contact with a wire 52 to feed power for electric discharge machining. The pinch roller 54 is pivotally mounted on the lower part of an oscillating lever 56. The upper end of the oscillating lever 56 is rotatably supported by the body 55 of the upper guide 51. A spring 57 urges the oscillating lever 56 in a direction so that the pinch roller 54 is always directed to the feed roller 53. To stably feed power to the wire 52 during electric discharge machining, the wire 52 is pressed against the feed roller 53 by the pinch roller 54. More specifically, in the condition shown in FIG. 5, the feed roller 53 is in contact with the pinch roller 54 under pressure, so that there is no gap formed between them.

In this condition, the leading end of the wire 52 newly fed downward in the automatic wire connecting operation interferes with the pinch roller 54, resulting in hindrance to wire connection. Therefore, when the automatic wire connecting operation is performed, the lever 56 is retracted to a position so that the pinch roller 54 is positioned sufficiently away from the feed roller 53 by means of an air actuator provided in the interior of the upper guide 51, and a wire passage is formed.

To form the wire passage, the feed roller 53 may be moved in a direction so that the feed roller 53 is positioned away from the wire passage, or a solenoid may be used for the actuator.

In either case, an actuator mechanism must be incorporated in the interior of the upper guide 51 to move the pinch roller 54 or the feed roller 53, causing a complex construction. Also, the actuator mechanism built into the upper guide 51 sometimes malfunctions due to electrolytic corrosion or leakage of machining fluid. Further, in the automatic wire connecting mechanism having many other moving members, the movements of the moving members should be linked mechanically as far as possible to avoid difficult problems of control for easier assurance of accurate operation.

In FIG. 5, hold rollers 59 are closed at the start of the automatic wire connecting operation (at the time when the wire is broken in the case of the automatic wire connection restoring operation) to hold and prevent the wire 52 from slipping away upward from between the feed roller 53 and the pinch roller 54 due to the acquired winding tendency or the elasticity of the wire 52 itself. After the wire is held by the hold rollers 59, the pinch roller 54 comes away from the feed roller 53.

The present invention provides a wire cut electric discharge machine having an automatic wire connecting function with simple construction and increased durability.

The wire cut electric discharge machine of the present invention comprises: wire feeding means disposed movably along a wire passage and having a driving-side centripetal guide surface formed at an end portion thereof; and an upper guide disposed on the downstream side of the wire feeding means with respect to the running direction of the wire in the wire passage.

The upper guide has a body, a die guide fixedly attached to a lower portion of the body, a subdie disposed at an upper portion of the body, an electric-power feeder fixedly attached to the body between the die guide and the subdie, and urging means disposed between the body and the subdie. The subdie has a receiving-side centripetal guide surface corresponding to the driving-side centripetal guide surface. The subdie is shiftable with respect to the body between a machining position in which the wire is in contact with the electric-power feeder and a wire connecting position in which said wire separates from said electric-power feeder, and is urged towards the machining position by the urging means.

When the wire is to be connected, the wire feeding means is engaged with the subdie while the driving-side centripetal guide surface is in contact with the receiving-side centripetal guide surface, thereby causing the subdie to be shifted to the wire connecting position.

The above arrangement simplifies the automatic wire connection mechanism which is disposed in the upper guide. An electric current may be supplied to the wire between electrodes for cutting wires when the wire feeding means is at a position away from the subdie so as to cut the wire.

The wire feeding means may be provided with a pipe into which cooling fluid is supplied, and a hollow member disposed below the pipe and into which cooling fluid is not supplied. The wire is cut in the hollow member.

The wire feeding means carries the cut wire to the upper guide and shifts the subguide to the wire connecting position. The subguide ensures stable power supply by bringing the wire into contact with the electric-power feeder at the machining position, and separates the wire passage from the electric-power feeder at the wire connecting position to clear hindrance to the wire insertion.

### BRIEF DESCRIPTION OF THE DRAWINGS

FIG. 1 is a front view schematically showing the principal portion of a wire cut electric discharge machine in accordance with one embodiment of the present invention;
FIG. 2 is a front sectional view showing the relationship between an upper guide and a wire feeding unit in machining operation;
FIG. 3 is a front sectional view showing the relationship between an upper guide and a wire feeding unit in wire connecting operation;
FIG. 4 is a top plan view showing a subdie provided in the upper guide and a plate spring; and
FIG. 5 is a partially cutaway front view of a conventional upper guide.

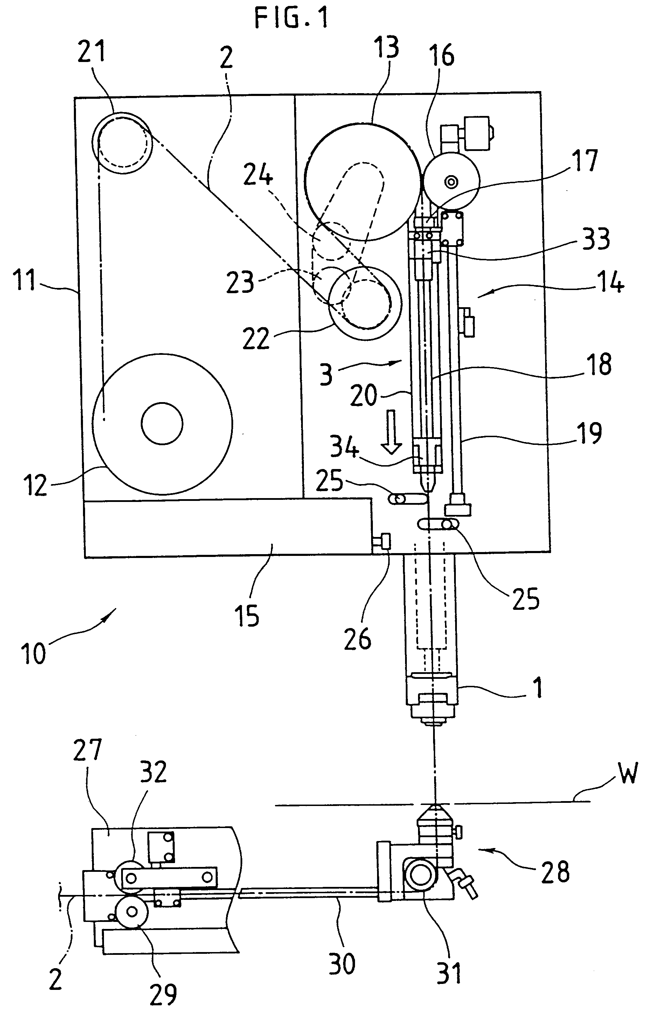

In FIG. 1, a wire cut electric discharge machine 10 having an automatic wire connecting function is provided with an upper machine frame 11 having an upper guide 1, and a lower machine frame (arm) 27 having a lower guide 28. On the upper machine frame 11 there are mounted a wire supply unit 12, a first idle roller 21, a second idle roller 22, a wire feeding roller 13, a pinch roller 16 which is in contact with the wire feeding roller 13, a wire cutting/guiding device 14, and a wire chip disposition unit 15.

The wire feeding roller 13 is connected to a wire feeding motor 23 and an encoder 24 by means of a timing belt, so that the number of revolutions of the motor 23 is detected by the encoder 24.

The wire cutting/guiding device 14 is provided with a wire feeding unit 3 having an upper electrode 17 for cutting wires, an actuator 19 for vertically moving the wire feeding unit 3, and a lower electrode 25. The wire feeding unit 3 has a wire feeding pipe 18, an upper bracket 33, a lower bracket 34, a slide plate 20, and an upper electrode 17. The upper and lower brackets 33 and 34 are attached to the upper and lower ends of the wire feeding pipe 18, respectively. The slide plate 20 is provided between the brackets 33 and 34 in parallel with the wire feeding pipe 18 so as to slide relative to a guide wall fixed vertically to the upper machine frame 11. The upper electrode 17 for cutting wires, being mounted to the upper bracket 33, is a clip type electrode which can hold/release the wire electrode 2. The upper bracket 33 is connected to the actuator 19, and the wire feeding unit 3 is moved vertically along the wire path or passage with respect to the upper machine frame 11 by the drive of the actuator 19.

A supply and drain pipe (not shown) for cooling water (machining fluid) is connected to the wire feeding pipe 18, by which cooling water is supplied to the interior of the wire feeding pipe 18.

The wire chip disposition unit 15 has a holding claw 26 which can protrude from its interior to a position near the lower electrode 25.

Disposed at the end of the lower machine frame 27 is a lower guide 28, and disposed at the base thereof are a wire take-up roller 29 and a pinch roller 32 which is in contact with the wire take-up roller 29. A wire guide pipe 30 is installed between the lower guide 28 and the wire take-up roller 29. A rotating roller 31, being disposed at the lower part of the lower guide 28, turns the installation path of the wire 2 toward a point between the wire take-up roller 29 and the pinch roller 32.

A workpiece W is placed on an unillustrated movable table so as to be positioned between the upper guide 1 and the lower guide 28. FIG. 1 shows only the bottom surface position of the workpiece W.

The wire 2, which is supplied from the wire supply unit 12, is extended to pass through the first idle roller 21 and the second idle roller 22, and between the wire feeding roller 13 and the pinch roller 16. It further extends to pass through the interior of the wire feeding pipe 18, the upper guide 1, a machining start hole formed in the workpiece W, the lower guide 28, the wire guide pipe 30 after being turned by the rotating roller 31, and along the wire passage reaching a point between the wire take-up roller 29 and the pinch roller 32.

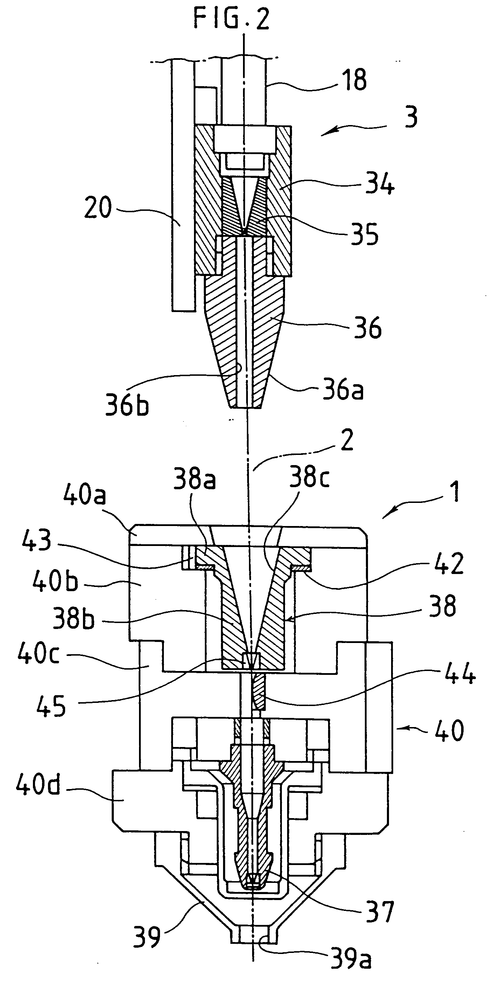

As shown in FIG. 2, a lower bracket 34 is mounted on an end of the wire feeding pipe 18. The lower bracket 34 has a through hole formed along the axis thereof. This through hole is partially narrowed by a tapered-hole piece 35 provided in the lower bracket 34. To the lower end of the lower bracket 34 a head 36 is attached, which has a melt cutting space 36b formed along the axis in the interior thereof. The head 36 is formed into a conical shape so that its diameter decreases gradually toward the lower end thereof, protruding downward from the lower bracket 34. The outer peripheral surface of the head 36 forms centripetal guide surface 36a on the driving side.

The upper guide 1 is provided with a body 40, a die guide 37, a subdie 38, and an electric power feeder 44 of a pressure-contact type. The body 40, being constructed by combining a plurality of blocks 40a to 40d, has, as a whole, a hollow portion circular in section which is formed along the axis in the interior thereof. A nozzle 39 having an injection port for machining fluid at its lower part is attached to the lower end of the block 40d. The die guide 37 is fixedly mounted in the hollow portion formed by the blocks 40c and 40d. The feeder 44 is fixedly mounted in the block 40c between the die guide 37 and the subdie 38.

The subdie 38 has a flange portion 38a and a body portion 38b which is perpendicular to the flange portion 38a. Both of the flange portion 38a and the body portion 38b have a circular cross section. The subdie 38 is mounted so that the flange portion 38a is positioned in an upper shallow hollow portion formed in the block 40b, and the body portion 38b is positioned in a lower hollow portion formed in the block 40b. The diameter of the body portion 38b is smaller than the diameter of the lower hollow portion in the block 40b. The diameter of the flange portion 38a is smaller than the diameter of the upper hollow portion in the block 40b, but larger than the diameter of the lower hollow portion. Therefore, the subdie 38 is engaged with the body 40 by means of the flange portion 38a, and can be shifted horizontally as much as the difference in diameter between the lower hollow portion formed in the block 40b and the body portion 38b. On the lower surface of the flange portion 38a, a lubricant film 42 is affixed to provide better sliding.

As shown in FIG. 4, a plate spring 43 is mounted between the inside wall of the upper hollow portion formed in the block 40b and the outer periphery of the flange portion 38a to always urge the subdie 38 in a direction in which the wire 2 guided by the subdie 38 is in contact with the feeder 44. When the wire 2 is not inserted, the subdie 38 is moved to a position where its body portion 38b is in contact with the wall of the lower hollow portion formed in the block 40b by the force of the plate spring 43.

As shown in FIG. 2, the subdie 38 has a conical concave portion which opens upwardly. The inside surface of the concave portion forms a passive-side centripetal guide surface 38C extending from the flange portion 38a to the body portion 38b. The axis of the cone coincides with the axis of the subdie 38, and the passive-side centripetal guide surface 38c is of a shape corresponding to the driving-side centripetal guide surface 36a formed on the head 36. At the lower end of the receiving-side centripetal guide surface 38c (the apex of the cone) a die tip 45 is mounted, which has a through hole for the wire 2. The peripheries of the inlet and outlet of the through hole in this tip 45 are formed smoothly so that the wire is not damaged.

FIG. 2 shows a positional relationship between the upper guide 1 and the wire feeding unit 3 in the case where the wire 2 is connected. In this condition, the wire feeding unit 3 is positioned upward, and the subdie 38 of the upper guide 1 is located at the machining position on the right in Fig. 2 by being pressed by the plate spring 43. At this time, the axis of the subdie 38 substantially coincides with the axis of the upper guide 1. The wire feeding unit 3 is arranged so that the axis thereof is slightly shifted to the left with respect to the axis of the subdie 38 located at the machining position. Therefore, the wire passage on the downstream with respect to the feeder 44 is slightly shifted towards the right relative to the wire passage on the upstream with respect to the feeder 44, and the wire 2 is pressed against the feeder 44. Thus, electric power is fed stably to the wire 2 in performing electric discharge machining on the workpiece W.

When the machining operation for one figure is completed on a workpiece W, or when the breakage of wire occurs, the control device gives a command for automatic wire connection.

The motor 23 is stopped to discontinue the feeding of wire by the command of the control device, and cooling water (machining fluid) is supplied to the interior of the wire feeding pipe 18. The flow of the cooling water supplied into the wire feeding pipe 18 is inhibited by the restricting piece 35, so that the cooling water scarcely reaches the melt cutting space 36b which lies under the tapered-hole piece 35. In the case of automatic wire connection restoring, the holding claw 26 of the wire chip disposition unit 15 juts out to hold the wire 2 at a position slightly separating from the lower electrode 25 on the downstream side.

The upper and lower electrodes 17 and 25 for cutting wires are brought into contact with the wire 2, and electric current is carried in the wire 2 between the electrodes 17 and 25. Thereupon, the wire 2 between the electrodes 17 and 25 is heated by Joule's heat, and then cut at a certain point in the melt cutting space 36b where cooling is not applied. The wire on the downstream side of the cutting point is discharged by the wire take-up roller 29. In the case of automatic wire connection repairing, the holding claw 26 takes the wire chip into the wire chip disposition unit 15 to dispose of the wire chip.

Then, the lower electrode 25 for cutting wires is opened to release the wire 2. After the completion of the cutting of the wire 2 is ascertained, the actuator 19 is driven to move the wire feeding unit 3 downward. The wire 2 moves together with the wire feeding unit 3 while being held by the upper electrode 17 for cutting wires. The head 36 of the wire feeding unit 3 enters the concave portion of the subdie 38 in the upper guide 1, and the driving-side centripetal guide surface 36a of the head 36 is brought into contact with the passive-side centripetal guide surface 38c of the subdie 38.

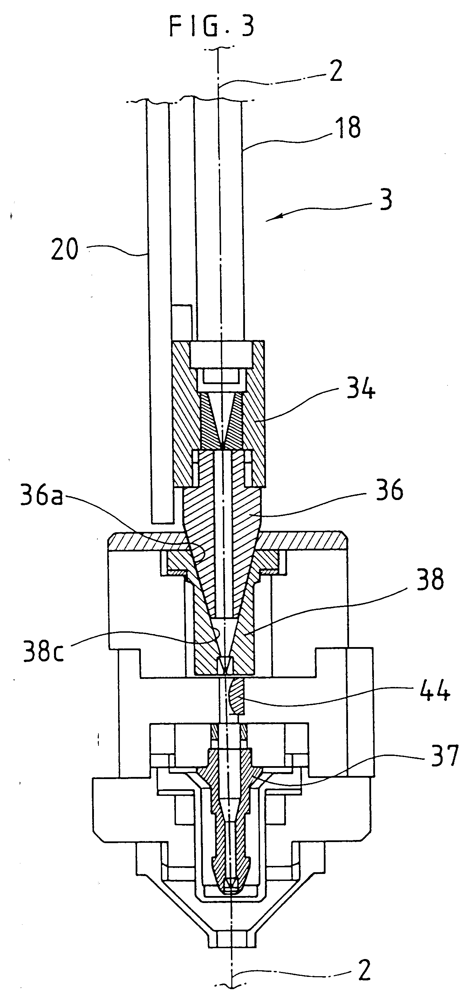

When the head 36 further enters the concave portion of the subdie 38 as the wire feeding unit 3 lowers, the receiving-side centripetal guide surface 38c slides on the driving-side centripetal guide surface 36a, so that the subdie 38 moves to the left in FIG. 2 against the elastic force of the plate spring 44. As a result, the driving-side centripetal guide surface 36a is brought into close contact with the receiving-side centripetal guide surface 38c as shown in FIG. 3, so that the axis of the wire feeding unit 3 coincides with that of the subdie 38. Thus, the subdie 38 shifts from the machining position to the wire connecting position. At this wire connecting position, the wire passage along the axis of the subdie 38 is separated from the surface of the feeder 44.

After the subdie 38 shifts to the wire connecting position, the upper electrode 17 for cutting wires is opened to release the wire 2. While jet water is supplied to the nozzle 4, the wire feeding motor 23 is driven to feed the new wire 2 from the wire supply unit 12. The wire 2, passing the side of the feeder 44 by the aid of jet water flow and passing through the die guide 37, is fed toward the machining start hole in the workpiece W, without any hindrance to the insertion of the wire 2.

The subsequent wire connecting procedure from the lower guide 28 to the wire take-up roller 29 is the same as the conventional procedure. The leading end of the wire 2, which passes through the lower guide 28, reaches the wire take-up roller 29 after passing through the wire guide pipe 30.

During this time, the encoder 24 detects the number of revolutions of the wire feeding motor 23, so that the control device can detect the position of the leading end of the wire 2 in the wire passage based on the signal from the encoder 24. The data indicating the position of the wire end can be used to control the wire feeding speed in the automatic wire connecting operation or to detect the location of improper wire connection when automatic wire connection is improper.

After ascertaining that the leading end of the wire 2 has reached the wire take-up roller 29, the control device moves the wire feeding unit 3 upward to the retracting position, and stops the supply of jet water, completing the automatic wire connecting operation.

The subdie 38 is pressed back to the machining position by the plate spring 43 so that the connected wire 2 is brought into contact with the feeder 44.

The present invention is not limited to the specific arrangement shown in the drawing, The driving-side centripetal guide surface 36a and the receiving-side centripetal guide surface 38c are not limited to a conical convex portion and a conical concave portion. Any structure may be adopted in which the subdie 38 is mechanically shifted by being pressed from above and the axes of the moving side and the receiving side coincide with each other.

According to the present embodiment, there is no need for installing an air actuator in the upper guide, so that the construction of the upper guide can be made simple. Also, when the wire is connected, the wire passage is shifted near the feeder provided in the upper guide, so that a new wire can be inserted smoothly without hindrance. The change of wire passage in the upper guide is reliable and exact, because the change is made by a mechanical arrangement using the downward movement of the wire feeding unit. Also, a simple mechanical arrangement in the upper guide reduces the effect of electrolytic corrosion and water leakage, providing high durability.

## Claims

1. A wire cut electric discharge machine having a function of automatically connecting a wire (2) along a predetermined wire path or passage, comprising:
wire feeding means (3) disposed in said wire passage and movable along said wire passage, said wire feeding means (3) having a driving-side centripetal guide surface (36a) formed at an end portion thereof; and
an upper guide (1) disposed on the downstream side of said wire feeding means (3) with respect to the running direction of said wire (2) in said wire passage;
said upper guide (1) having a body (40), a die guide (37) fixedly attached to a lower portion of said body (40), and an electric-power feeder (44) fixedly attached to said body (40);
the wire cut electric discharge machine being characterised by:
said upper guide (1) further having a subdie (38) disposed at an upper portion of said body (40) with said electric-power feeder (44) being attached to said body (40) between said die guide (37) and said subdie (38), and urging means (43) disposed between said body (40) and said subdie (38);
said subdie (38) having a receiving-side centripetal guide surface (38c) corresponding to said driving-side centripetal guide surface (36a), being shiftable with respect to said body (40) between a machining position in which said wire (2) is in contact with said electric-power feeder (44) and a wire connecting position in which said wire (2) separates from said electric-power feeder (44), and being urged towards said machining position by said urging means (43);
whereby when a wire connection is to take place, said wire feeding means (3) can be engaged with said subdie (38) with said driving-side centripetal guide surface (36a) in contact with said receiving-side centripetal guide surface (38c), thereby to cause said subdie (38) to be shifted to said wire connecting position.

2. A wire cut electric discharge machine according to claim 1, wherein said wire feeding means (3) has a convex portion, an outer surface of said convex portion forming said driving-side centripetal guide surface (36a), and said subdie (38) has a concave portion, an inner surface of said concave portion forming said receiving-side centripetal guide surface (38c).

3. A wire cut electric discharge machine according to claim 2, wherein said convex portion of said wire feeding means (3) is of a conical shape with its apex at a bottom thereof, and the concave portion of said subdie (38) is of a conical shape which is the same as said conical shape of said convex portion.

4. A wire cut electric discharge machine according to any one of the preceding claims, wherein said wire feeding means (3) further comprises electrodes (17,25) for cutting wires, and an electric current is supplied to said wire (2) between said electrodes (17,25) when said wire feeding means (3) is at a position away from said subdie (38) so that said wire (2) is cut.

5. A wire cut electric discharge machine according to claim 4, wherein said wire feeding means (3) has a pipe (18) into which cooling fluid is supplied and a hollow member (36) disposed below said pipe (18) and into which cooling fluid is not supplied, so that said wire (2) is cut in said hollow member (36).

## Patentansprüche

1. Elektrische Entladungsdrahtschneidemaschine, die eine Funktion zum selbsttätigen Verbinden eines Drahts (2) längs eines vorbestimmten Drahtwegs oder -kanals hat, mit
einem Drahtzuführungsmittel (3), das in dem Drahtkanal angeordnet und längs des Drahtkanals bewegbar ist, wobei das Drahtzuführungsmittel (3) eine führungsseitige zentripetale Führungsfläche (36a) hat, die an einem Endteil desselben ausgebildet ist,
und
einer oberen Führung (1), die auf der stromabwärtigen Seite des Drahtzuführungsmittels (3) in bezug auf die Laufrichtung des Drahts (2) in dem Drahtkanal angeordnet ist,
wobei die obere Führung (1) einen Körper (40), eine Zieheisenführung (37), die fest an einem unteren Teil des Körpers (40) angebracht ist, und eine fest an dem Körper (40) angebrachte Stromzuführungsvorrichtung (44) hat,
welche elektrische Entladungsdrahtschneidemaschine dadurch **gekennzeichnet** ist, daß
die obere Führung (1) ferner enthält: ein Hilfszieheisen (38), das an einem oberen Teil des Körpers (40) angeordnet ist, wobei die Stromzuführungsvorrichtung (44) zwischen der Zieheisenführung (37) und dem Hilfszieheisen (38) an dem Körper (40) angebracht ist, und ein Druckausübungsmittel (43), das zwischen dem Körper (40) und dem Hilfszieheisen (38) angeordnet ist,
das Hilfszieheisen (38), welches eine aufnahmeseitige zentripetale Führungsfläche (38c) hat, die der führungsseitigen zentripetalen Führungsfläche (36a) entspricht, in bezug auf den Körper (40) zwischen einer Bearbeitungsposition, in welcher sich der Draht (2) in Berührung mit der Stromzuführungsvorrichtung (44) befindet, und einer Drahtverbindungsposition, in welcher der Draht (2) von der Stromzuführungsvorrichtung (44) getrennt ist, verschiebbar ist und durch das Druckausübungsmittel (43) in Richtung auf die Bearbeitungsposition gedrückt wird,
wodurch das Drahtzuführungsmittel (3), wenn eine Drahtverbindung vorzunehmen ist, in Eingriff mit dem Hilfszieheisen (38) gebracht werden kann, wobei sich die führungsseitige zentripetale Führungsfläche (36a) in Berührung mit der aufnahmeseitigen zentripetalen Führungsfläche (38c) befindet, um dadurch zu veranlassen, daß das Hilfszieheisen (38) in die Drahtverbindungsposition verschoben wird.

2. Elektrische Entladungsdrahtschneidemaschine nach Anspruch 1, bei der das Drahtzuführungsmittel (3) einen konvexen Abschnitt hat, wobei eine Außenfläche des konvexen Abschnitts die führungsseitige zentripetale Führungsfläche (36a) bildet, und das Hilfszieheisen (38) einen konkaven Abschnitt hat, wobei eine Innenfläche des konkaven Abschnitts die aufnahmeseitige zentripetale Führungsfläche (38c) bildet.

3. Elektrische Entladungsdrahtschneidemaschine nach Anspruch 2, bei der der konvexe Abschnitt des Drahtzuführungsmittels (3) von einer konischen Form ist, wobei sein Scheitelpunkt an einem unteren Ende desselben liegt, und der konkave Abschnitt des Hilfszieheisens (38) von einer konischen Form ist, welche die gleiche wie die konische Form des konvexen Abschnitts ist.

4. Elektrische Entladungsdrahtschneidemaschine nach einem der vorhergehenden Ansprüche, bei der das Drahtzuführungsmittel (3) ferner Elektroden (17, 25) zum Abschneiden von Drähten umfaßt und dem Draht (2) zwischen den den von Drähten umfaßt und dem Draht (2) zwischen den Elektroden (17, 25) ein elektrischer Strom zugeführt wird, wenn sich das Drahtzuführungsmittel (3) in einer Position entfernt von dem Hilfszieheisen (38) befindet, so daß der Draht (2) abgeschnitten wird.

5. Elektrische Entladungsdrahtschneidemaschine nach Anspruch 4, bei der das Drahtzuführungsmittel (3) eine Röhre (18), in die Kühlungsflüssigkeit eingeleitet wird, und ein hohles Teil (36) hat, das unterhalb der Röhre (18) angeordnet ist und in das keine Kühlungsflüssigkeit eingeleitet wird, so daß der Draht (2) in dem hohlen Teil (36) abgeschnitten wird.

## Revendications

1. Machine d'étincelage à découpe par fil ayant pour fonction la connexion automatique d'un fil (2) le long d'une voie ou d'un passage prédéterminé pour le fil, comprenant:
un moyen d'alimentation de fil (3) disposé dans ledit passage pour le fil et mobile le long dudit passage pour le fil, ledit moyen d'alimentation de fil (3) possédant une surface de guidage centripète (36a) côté entraînement, formée à une de ses portions terminales; et
un guide supérieur (1) disposé du côté aval dudit moyen d'alimentation de fil (3) par rapport à la direction de défilement dudit fil (2) dans ledit passage pour le fil;
ledit guide supérieur (1) possédant un corps (40), un guide de matrice (37) fixé à demeure à une portion inférieure dudit corps (40) et un dispositif d'alimentation de courant électrique (44) fixé à demeure audit corps (40);
la machine d'étincelage à découpe par fil étant caractérisée par le fait que:
ledit guide supérieur (1) possède en outre une matrice inférieure (38) disposée sur une portion supérieure dudit corps (40), ledit dispositif d'alimentation de courant électrique (44) étant fixé audit corps (40) entre ledit guide de matrice (37) et ladite matrice inférieure (38), ainsi qu'un moyen de pressage (43) disposé entre ledit corps (40) et ladite matrice inférieure (38);
ladite matrice inférieure (38) possédant une surface de guidage centripète (38c) côté réception correspondant à ladite surface de guidage centripète (36a) côté entraînement, étant à même d'être décalée par rapport audit corps (40) entre une position d'usinage dans laquelle ledit fil (2) se trouve en contact avec ledit dispositif d'alimentation de courant électrique (44) et une position de connexion de fil dans laquelle ledit fil (2) s'écarte du dispositif d'alimentation de courant électrique (44), et étant pressée en direction de ladite position d'usinage par ledit moyen de pressage (43);
dans laquelle, lorsqu'une connexion de fil doit avoir lieu, ledit moyen d'alimentation de fil (3) peut venir se mettre en contact avec ladite matrice inférieure (38) en mettant ladite surface de guidage centripète (36a) côté entraînement en contact avec ladite surface de guidage centripète (38c) côté réception pour ainsi provoquer un décalage de ladite matrice inférieure (38) dans ladite position de connexion de fil.

2. Machine d'étincelage à découpe par fil selon la revendication 1, dans laquelle ledit moyen d'alimentation de fil (3) possède une portion convexe, la surface externe de ladite portion convexe formant ladite surface de guidage centripète (36a) côté entraînement et ladite matrice inférieure (38) possède une portion concave, la surface interne de ladite portion concave formant ladite surface de guidage centripète (38c) côté réception.

3. Machine d'étincelage à découpe par fil selon la revendication 2, dans laquelle ladite portion convexe dudit moyen d'alimentation de fil (3) est de forme conique dont le sommet est disposé dans sa partie inférieure et la portion concave de ladite matrice inférieure (38) est de forme conique, cette forme conique étant la même que ladite forme conique de ladite portion convexe.

4. Machine d'étincelage à découpe par fil selon l'une quelconque des revendications précédentes, dans laquelle ledit moyen d'alimentation de fil (3) comprend en outre des électrodes (17, 25) pour couper des fils, et un courant électrique alimente ledit fil (2) entre lesdites électrodes (17, 25) lorsque ledit moyen d'alimentation de fil (3) se trouve dans une position à l'écart de ladite matrice inférieure (38) si bien que ledit fil (2) est coupé.

5. Machine d'étincelage à découpe par fil selon la revendication 4, dans laquelle ledit moyen d'alimentation de fil (3) comporte un conduit (18) qu'alimente du fluide de refroidissement, et un élément creux (36) disposé en dessous dudit conduit (18) et qui n'est pas alimenté avec du fluide de refroidissement, si bien que ledit fil (2) est coupé dans ledit élément creux (36).
